# EUROPÄISCHE PATENTSCHRIFT

(11) **EP 2 530 824 B1**
(45) Veröffentlichungstag und Bekanntmachung des Hinweises auf die Patenterteilung: **18.08.2021**
(21) Anmeldenummer: 12003822.9
(22) Anmeldetag: 15.05.2012
(51) Int. Cl.: H02M 7/5387

(54) **Wechselrichter-Schaltungsanordung**
Inverter
Onduleur

(30) Priorität: 20.05.2011 DE 102011102126
(43) Veröffentlichungstag der Anmeldung: 05.12.2012
(73) Patentinhaber: Diehl AKO Stiftung & Co. KG, 88239 Wangen im Allgäu (DE)
(72) Erfinder: Weinmann, Martin, 88339 Bad Waldsee (DE); Zeh, Stefan, 88239 Wangen (DE); Bihler, Simon, 88239 Wangen (DE)
(74) Vertreter: Diehl Patentabteilung

(56) Entgegenhaltungen:
- WO-A1-91/03104
- WO-A1-2007/029544
- JP-A- 2010 088 191
- US-A1- 2009 108 798
- None

## Beschreibung

Die vorliegende Erfindung betrifft eine Wechselrichter-Schaltungsanordnung und ein Verfahren zum Betreiben eines Wechselrichters.

Zum Betreiben elektrischer Antriebe wie zum Beispiel eines Drehstrommotors werden Wechselrichter bzw. Umrichter verwendet, welche durch Takten der Eingangsspannung eine Ausgangsspannung / einen Ausgangsstrom mit unterschiedlicher Größe und Frequenz erzeugen können. Um das Takten der Eingangsspannung zu ermöglichen, gehören zu den wesentlichen Bestandteilen eines solchen Wechselrichters elektrische Leistungsschalter, die üblicherweise zu Halbbrücken in Reihe geschaltet sind.

Die US 2009/0108798 A1 offenbart eine Wechselrichter-Schaltungsanordnung für ein elektrisches Antriebssystem eines Kraftfahrzeugs, auf welcher der Oberbegriff der Ansprüche 1 und 5 basiert. Diese herkömmliche Wechselrichter-Schaltungsanordnung hat drei elektrische Halbbrücken, welche jeweils einen ersten Leistungsschalter und einen zweiten Leistungsschalter aufweisen, die in Reihe geschaltet sind und deren Verbindung jeweils einen Ausgang des Wechselrichters darstellt, und eine Steuereinrichtung zum Ansteuern der Leistungsschalter der Halbbrücken, wobei in einem Arbeitsbereich mit hohem Drehmoment zumindest überwiegend die ersten Leistungsschalter eingeschaltet sind.

Es ist zudem bekannt, dass bei niedrigen Leistungen oder hohen Schaltfrequenzen vorzugsweise MOSFETs als Leistungsschalter eingesetzt werden. Der Grund hierfür ist, dass MOSFETs im Allgemeinen bei kleinen Strömen aufgrund ihres geringen Durchlasswiderstandes nur sehr geringe Durchlassverluste aufweisen. Außerdem können MOSFETs üblicherweise mit Hilfe großer Steuerströme sehr schnell geschaltet werden.

Es ist ferner bekannt, dass bei hohen Leistungen und niedrigen Schaltfrequenzen vorzugsweise IGBTs als Leistungsschalter verwendet werden. Dies liegt daran, dass IGBTs im Allgemeinen bei großen Strömen eine im Vergleich zu MOSFETs geringe Durchlassspannung aufweisen. Außerdem eignen sich IGBTs aufgrund des beim Abschalten auftretenden Tailstroms üblicherweise nicht für hohe Schaltfrequenzen.

Häufig besitzen Systeme mit elektrischen Antrieben mehrere unterschiedliche Betriebspunkte bzw. Arbeitsbereiche. Hierdurch ergibt sich zum Beispiel der Nachteil, dass im Fall der Verwendung von IGBTs als Leistungsschalter im Wechselrichter für einen Betriebspunkt mit hohen Leistungen und niedrigen Schaltfrequenzen die Verluste bei kleiner Leistungsaufnahme relativ groß sind. Andererseits entsteht dieser Nachteil bei der Verwendung von MOSFETs als Leistungsschalter in Arbeitsbereichen mit hoher Leistungsaufnahme.

In der JP 10-080152 A wird vorgeschlagen, in den Halbbrückenzweigen des Wechselrichters jeweils MOSFETs und IGBTs parallel zu schalten. Diese beiden Leistungsschalterarten werden jeweils gleichzeitig geschaltet, sodass bei kleinen Strömen der MOSFET die Durchflussspannung niedrig hält, während der IGBT bei hohen Strömen die Flussspannung begrenzt.

Die DE 100 10 957 A1 offenbart ebenfalls eine Wechselrichter-Schaltungsanordnung, bei der in jedem Halbbrückenzweig eine Parallelschaltung eines IGBT und eines MOSFET vorgesehen ist. Die parallel geschalteten Leistungsschalter werden gleichzeitig eingeschaltet, der MOSFET aber jeweils zeitverzögert zu dem IGBT ausgeschaltet.

Diese Wechselrichter-Schaltungsanordnungen mit parallel geschalteten IGBTs und MOSFETs in jedem Halbbrückenzweig benötigen jedoch die doppelte Anzahl an Leistungsschaltern.

Die WO 91/03104 A1 und die WO 2007/029544 A1 offenbaren Wechselrichter-Schaltungsanordnungen, bei denen die Halbbrückenzweige eine Reihenschaltung eines IGBT und eines MOSFET haben.

Bei Drehstrommotoren mit freiem Sternpunkt können für die Ansteuerung der Leistungsschalter in den Halbbrücken des Wechselrichters im Allgemeinen verschiedene Pulsweitenmodulationen (PWM) verwendet werden, um die gewünschte Spannungsdifferenz zwischen den Motorklemmen bereitzustellen, sodass sich zum Beispiel drei um 120° versetzte sinusförmige Ströme durch die Motorwicklungen des Drehstrommotors ergeben.

Üblicherweise wird die so genannte "normale PWM" verwendet, bei welcher das Nullsystem im zeitlichen Mittel auf dem halben Zwischenkreispotenzial liegt. Daneben ist zum Beispiel aus der EP 0 363 514 A1 auch die so genannten "zwischenkreisgeklemmte PWM" (= engl. "bus clamped PWM") bekannt, bei welcher immer für 120° der Drehfeldbewegung (= eine Phase) eine Motorklemme bzw. Halbbrücke auf eine Zwischenkreisschiene geklemmt wird oder abwechselnd jeweils für 60° ein Halbbrückenzweig auf die untere Zwischenkreisschiene und dann für 60° ein anderer Halbbrückenzweig auf die obere Zwischenkreisschiene geklemmt werden. Bei der "normalen PWM" werden die einzelnen Leistungsschalter der Halbbrücken gleichmäßig belastet, wobei jedoch relativ hohe Schaltverluste auftreten. Die "zwischenkreisgeklemmte PWM" reduziert dagegen die Schaltverluste um bis zu einem Drittel; die Durchlassverluste verlagern sich dabei aber jeweils zu Lasten des durchgängig geschalteten, d.h. nicht getakteten Leistungsschalters.

Es ist die Aufgabe der vorliegenden Erfindung, eine verbesserte Wechselrichter-Schaltungsanordnung mit einem guten Wirkungsgrad zu schaffen. Der gesteigerte Wirkungsgrad soll dabei insbesondere auch bei niedriger Leistungsaufnahme erreicht werden.

Diese Aufgabe wird gelöst durch eine Wechselrichter-Schaltungsanordnung mit den Merkmalen des Anspruchs 1 bzw. ein Verfahren zum Betreiben eines Wechselrichters mit den Merkmalen des Anspruches 5. Vorteilhafte Ausgestaltungen und Weiterbildungen der Erfindung sind Gegenstand der abhängigen Ansprüche.

Die Wechselrichter-Schaltungsanordnung gemäß der Erfindung weist drei elektrische Halbbrücken, welche jeweils zwei in Reihe geschaltete Leistungsschalter aufweisen, deren Verbindung jeweils einen Ausgang des Wechselrichters darstellt, und eine Steuereinrichtung zum Ansteuern der Leistungsschalter der Halbbrücken auf. Jede der drei Halbbrücken weist einen ersten Leistungsschalter und einen zweiten Leistungsschalter auf, wobei die ersten Leistungsschalter in einem ersten Arbeitsbereich des Wechselrichters einen höheren Durchlasswiderstand als die zweiten Leistungsschalter haben und die ersten Leistungsschalter in einem von dem ersten Arbeitsbereich verschiedenen zweiten Arbeitsbereich des Wechselrichters einen geringeren Durchlasswiderstand als die zweiten Leistungsschalter haben. Ferner ist die Steuereinrichtung ausgebildet, um die Leistungsschalter derart anzusteuern, dass in dem ersten Arbeitsbereich des Wechselrichters zumindest überwiegend die zweiten Leistungsschalter eingeschaltet sind und/oder in dem zweiten Arbeitsbereich des Wechselrichters zumindest überwiegend die ersten Leistungsschalter eingeschaltet sind. Außerdem ist die Steuereinrichtung ausgebildet, um die Leistungsschalter derart anzusteuern, dass in jeder Phase wenigstens eine der drei Halbbrücken ungetaktet bleibt und dass in der ungetakteten Halbbrücke jeweils derjenige des ersten oder des zweiten Leistungsschalters eingeschaltet ist, der in dem momentanen Arbeitsbereich den geringeren Durchlasswiderstand besitzt.

Die erfindungsgemäße Wechselrichter-Schaltungsanordnung zeichnet sich aus durch eine Kombination aus einer vorteilhaften Schaltungstopologie und einer vorteilhaften Ansteuerung der Leistungsschalter. Wesentliches Merkmal der vorteilhaften Schaltungstopologie ist die Verwendung von Reihenschaltung von zwei unterschiedlichen Leistungsschaltern in jeder Halbbrücke des Wechselrichters derart, dass die ersten Leistungsschalter in einem ersten Arbeitsbereich des Wechselrichters einen höheren Durchlasswiderstand und in einem zweiten Arbeitsbereich des Wechselrichters einen geringeren Durchlasswiderstand als die zweiten Leistungsschalter haben. Wesentliches Merkmal der vorteilhaften Ansteuerung der Leistungsschalter ist es, in dem ersten Arbeitsbereich des Wechselrichters zumindest überwiegend die zweiten Leistungsschalter einzuschalten, welche in diesem ersten Arbeitsbereich einen geringeren Durchlasswiderstand besitzen, und/oder in dem zweiten Arbeitsbereich des Wechselrichters zumindest überwiegend die ersten Leistungsschalter einzuschalten, welche in diesem zweiten Arbeitsbereich einen geringeren Durchlasswiderstand besitzen.

Auf diese Weise wird erreicht, dass in jedem Arbeitsbereich des Wechselrichters überwiegend diejenigen Leistungsschalter der zwei unterschiedlichen Leistungsschalter in jeder Halbbrücke des Wechselrichters eingeschaltet, d.h. belastet werden können, die in diesem Arbeitsbereich den geringeren Durchlasswiderstand besitzen, sodass die entsprechenden Durchlassverluste gering sind. Dies gilt bei der erfindungsgemäßen Wechselrichter-Schaltungsanordnung vorzugsweise über den gesamten Arbeitsbereich des Wechselrichters, insbesondere aber auch bei kleinen Strömen, sodass der Wirkungsgrad auch bei kleinen Leistungen verbessert werden kann.

Die erfindungsgemäße Schaltungsanordnung hat insbesondere bei niedrigen Schaltfrequenzen einen Vorteil, da hier die Durchlassverluste die Schaltverluste stark überwiegen, sodass eine Reduzierung der Durchlassverluste eine größere Auswirkung auf die Gesamtverluste zeigt.

Ferner werden durch die gemäß der Erfindung vorgeschlagene Kombination aus Schaltungstopologie und Ansteuerung der Leistungsschalter auch keine zusätzlichen Leistungsschalter benötigt, um die Durchlassverluste zu reduzieren. Hierdurch können die Herstellungskosten der Schaltungsanordnung im Vergleich zu den oben beschriebenen herkömmlichen Schaltungstopologien mit Parallelschaltungen aus MOSFET und IGBT in jedem Halbbrückenzweig deutlich verringert werden.

Die erfindungsgemäße Schaltungsanordnung weist drei elektrische Halbbrücken auf. Besonders bevorzugt ist die Verwendung von drei Halbbrücken zum Erzeugen eines 6-pulsigen Dreiphasen-Drehstroms, welcher beispielsweise für Drehstrommotoren in Waschmaschinen, Wäschetrocknern und dergleichen und in der Kompressorelektronik von Kühlschränken, Gefriertruhen und dergleichen eingesetzt werden kann. Die erfindungsgemäße Wechselrichter-Schaltungsanordnung ist bevorzugt für Drehstrommotoren in Sternschaltung oder Dreiecksschaltung einsetzbar.

Jede der drei Halbbrücken der Schaltungsanordnung besteht aus zwei Halbbrückenzweigen, in denen jeweils wenigstens ein Leistungsschalter angeordnet ist und deren Verbindung einen Ausgang des Wechselrichters darstellt. Die Leistungsschalter in den beiden Halbbrückenzweigen einer Halbbrücke sind zueinander in Reihe geschaltet.

Der Wechselrichter besitzt einen ersten Arbeitsbereich und einen zweiten Arbeitsbereich, wobei sich die Durchlasswiderstände der unterschiedlichen Leistungsschalter in den Halbbrücken in diesen beiden Arbeitsbereichen verschieden verhalten. Darüber hinaus kann der Wechselrichter einen oder mehrere weitere Arbeitsbereiche aufweisen, in denen dann vorzugsweise eine Ansteuerung der Leistungsschalter analog zu jener in den ersten und zweiten Arbeitsbereichen erfolgt.

Unter dem Durchlasswiderstand eines Leistungsschalters soll in diesem Zusammenhang insbesondere der resultierende bzw. effektive Durchlasswiderstand des Leistungsschalters selbst und etwaiger, diesem parallel oder in Reihe geschalteter weiterer Bauelemente verstanden werden. Bei diesen weiteren Bauelementen handelt es sich zum Beispiel um antiparallel geschaltete Freilaufdioden oder um Body-Dioden. Alternativ können unter dem Durchlasswiderstand im Sinne der Erfindung aber auch nur die Durchlasswiderstände der verwendeten Leistungsschalter selbst verstanden werden.

In einer bevorzugten Ausgestaltung der Erfindung sind die drei elektrischen Halbbrücken im Wesentlichen identisch zueinander aufgebaut. Insbesondere sollen alle Halbbrücken der Schaltungsanordnung vorzugsweise die gleichen Leistungsschalter enthalten.

In einer bevorzugten Ausgestaltung der Erfindung handelt es sich bei den ersten Leistungsschaltern der Halbbrücken jeweils um IGBTs. Den IGBTs ist vorzugsweise jeweils eine Freilaufdiode antiparallel geschaltet.

In einer bevorzugten Ausgestaltung der Erfindung handelt es sich bei den zweiten Leistungsschaltern der Halbbrücken jeweils um MOSFETs. Die MOSFETs sind vorzugsweise jeweils mit einer antiparallel geschalteten Body-Diode versehen.

Gemäß der Erfindung ist die Steuereinrichtung derart ausgestaltet, dass sie die Leistungsschalter derart pulsweitenmoduliert ansteuert, dass in jeder Phase wenigstens eine der wenigstens zwei Halbbrücken ungetaktet bleibt.

Zudem ist die Steuereinrichtung so ausgestaltet, dass sie die Leistungsschalter derart ansteuert, dass in der ungetakteten Halbbrücke jeweils derjenige des ersten oder des zweiten Leistungsschalters eingeschaltet ist, der in dem momentanen Arbeitsbereich den geringeren Durchlasswiderstand besitzt.

Es handelt sich dabei bevorzugt um die eingangs beschriebene, so genannte "zwischenkreisgeklemmte PWM". Aufbau und Funktionsweise dieser zwischenkreisgeklemmten PWM sind beispielsweise in der EP 0 363 514 A1 detailliert beschrieben.

Das erfindungsgemäße Verfahren zum Betreiben eines Wechselrichters mit drei elektrischen Halbbrücken, welche jeweils zwei in Reihe geschaltete Leistungsschalter aufweisen, deren Verbindung jeweils einen Ausgang des Wechselrichters darstellt, wobei jede der drei Halbbrücken einen ersten Leistungsschalter und einen zweiten Leistungsschalter aufweist, wobei die ersten Leistungsschalter in einem ersten Arbeitsbereich des Wechselrichters einen höheren Durchlasswiderstand als die zweiten Leistungsschalter haben und die ersten Leistungsschalter in einem von dem ersten Arbeitsbereich verschiedenen zweiten Arbeitsbereich des Wechselrichters einen geringeren Durchlasswiderstand als die zweiten Leistungsschalter haben, ist dadurch gekennzeichnet, dass die Leistungsschalter derart angesteuert werden, dass in dem ersten Arbeitsbereich des Wechselrichters zumindest überwiegend die zweiten Leistungsschalter eingeschaltet werden und/oder in dem zweiten Arbeitsbereich des Wechselrichters zumindest überwiegend die ersten Leistungsschalter eingeschaltet werden, dass in jeder Phase wenigstens eine der drei Halbbrücken ungetaktet bleibt, und dass in der ungetakteten Halbbrücke jeweils derjenige des ersten oder des zweiten Leistungsschalters eingeschaltet wird, der in dem momentanen Arbeitsbereich den geringeren Durchlasswiderstand besitzt.

Mit diesem Betriebsverfahren der Erfindung lassen sich die gleichen Vorteile erzielen, wie sie oben in Zusammenhang mit der erfindungsgemäßen Wechselrichter-Schaltungsanordnung erläutert wurden. Darüber hinaus gelten die obigen Ausführungen zu den verschiedenen Begriffen, die hier verwendet werden, analog.

In einer bevorzugten Ausgestaltung der Erfindung sind die ersten Leistungsschalter der Halbbrücken jeweils IGBTs und/oder sind die zweiten Leistungsschalter der Halbbrücken jeweils MOSFETs. In einer weiteren Alternative der Erfindung sind die ersten Leistungsschalter der Halbbrücken jeweils MOSFETs und/oder sind die zweiten Leistungsschalter der Halbbrücken jeweils IGBTs.

Obige sowie weitere Merkmale und Vorteile der Erfindung werden aus der nachfolgenden Beschreibung eines bevorzugten, nicht-einschränkenden Ausführungsbeispiels unter Bezug auf die beiliegenden Zeichnungen besser verständlich. Darin zeigen:
- Fig. 1: eine Wechselrichter-Schaltungsanordnung zum Ansteuern eines Drehstrommotors gemäß der vorliegenden Erfindung;
- Fig. 2: den Stromverlauf in einer Halbbrücke der Schaltungsanordnung von Fig. 1 in einem Phasenabschnitt und im ersten Arbeitsbereich; und
- Fig. 3: ein Widerstands-Strom-Diagramm für einen typischen IGBT und einen typischen MOSFET zur Veranschaulichung der verschiedenen Arbeitsbereiche des Wechselrichters.

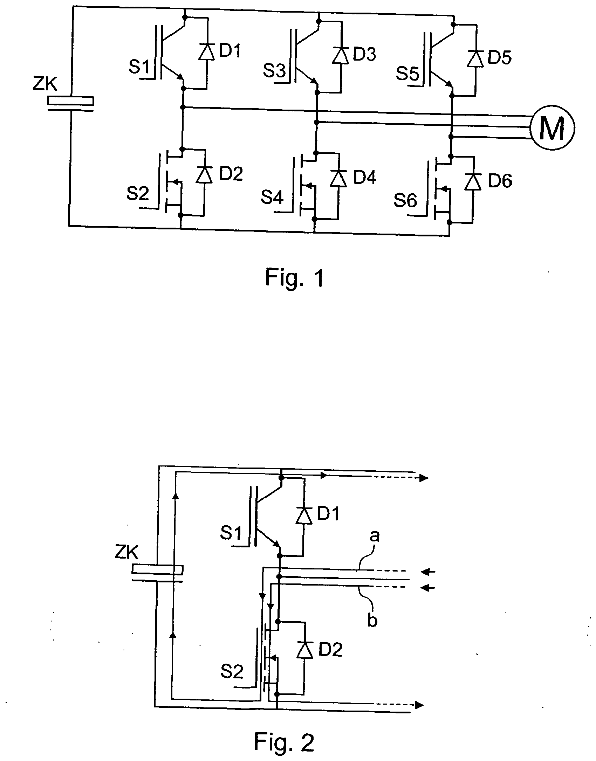

Figur 1 zeigt den prinzipiellen Aufbau eines 6-pulsigen Wechselrichters zum Ansteuern eines Dreiphasen-Drehstrommotors.

Die Wechselrichter-Schaltungsanordnung von Figur 1 hat insgesamt drei identische elektrische Halbbrücken, die von einem Zwischenkreis ZK gespeist werden. Jede der drei Halbbrücken weist eine Reihenschaltung aus zwei Leistungsschaltern S1 und S2, S3 und S4 bzw. S5 und S6 auf.

Die Verbindung der beiden Leistungsschalter einer Halbbrücke stellt jeweils einen Ausgang des Wechselrichters dar, der mit einer Motorwicklung des Drehstrommotors M verbunden ist. Die Motorwicklungen des Drehstrommotors M können zum Beispiel in Sternschaltung oder Dreiecksschaltung angeordnet sein.

In diesem Ausführungsbeispiel ist in den High-Side-Pfaden bzw. oberen Halbbrückenzweigen von Figur 1 jeweils ein erster Leistungsschalter S1, S3, S5 in Form eines IGBT angeordnet, während in den Low-Side-Pfaden bzw. unteren Halbbrückenzweigen von Figur 1 jeweils ein zweiter Leistungsschalter S2, S4, S6 in Form eines MOSFET angeordnet ist. In einer anderen Ausführungsform können die ersten Leistungsschalter S1, S3, S5 als MOSFETs und die zweiten Leistungsschalter S2, S4, S6 als IGBTs ausgebildet sein.

Den IGBTs S1, S3, S5 ist jeweils eine Freilaufdiode D1, D3, D5 antiparallel geschaltet. Ebenso ist den MOSFETs S2, S4, S6 jeweils eine Body-Diode D2, D4, D6 zugeordnet.

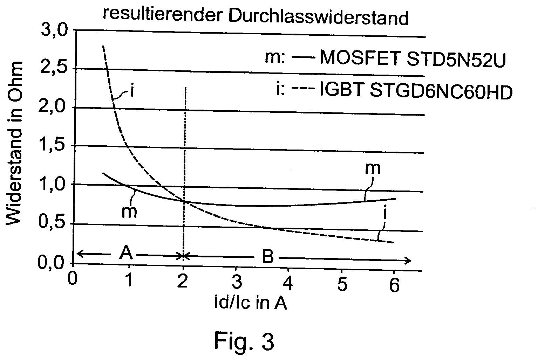

In Figur 3 ist der aus den Strom-Spannungs-Kennlinien eines MOSFET (z.B. STD5N52U, Kurve m) und eines IGBT (z.B. STGD6NC60HD, Kurve i) resultierende Durchlasswiderstand über dem Phasenstrom aufgetragen. Der resultierende Durchlasswiderstand ergibt sich dabei aus den Durchlasswiderständen des jeweiligen Leistungsschalters selbst und der zugehörigen Diode in Abhängigkeit von dem Drainstrom Id bzw. dem Kollektorstrom Ic.

Es lassen sich zwei Arbeitsbereiche A und B mit unterschiedlichen Verhältnissen der Durchlasswiderstände in Figur 3 erkennen. In einem ersten Arbeitsbereich A mit niedrigen Phasenströmen (kleine Leistungsaufnahme) weist der IGBT einen deutlichen höheren Durchlasswiderstand als der MOSFET auf. In einem zweiten Arbeitsbereich B mit höheren Phasenströmen (große Leistungsaufnahme) weist dagegen der MOSFET einen höheren Durchlasswiderstand als der IGBT auf.

Grundsätzlich ist es auch denkbar, dass der Wechselrichter mehr als diese zwei unterschiedlichen Arbeitsbereiche A und B aufweist.

Gemäß der vorliegenden Erfindung werden die ersten und zweiten Leistungsschalter S1 - S6 deshalb mittels einer Steuereinrichtung (nicht dargestellt) so angesteuert, dass in dem ersten Arbeitsbereich A überwiegend die MOSFETs S2, S4, S6 belastet, d.h. eingeschaltet werden und in dem zweiten Arbeitsbereich B überwiegend die IGBTs S1, S3, S5 belastet, d.h. eingeschaltet werden. Auf diese Weise können in beiden Arbeitsbereichen A, B die Durchlassverluste der Leistungsschalter S1 - S6 in den Halbbrücken reduziert werden und damit der Wirkungsgrad des Wechselrichters gesteigert werden.

In einer bevorzugten Ausführungsform der Erfindung werden die Leistungsschalter S1 - S6 des Wechselrichters von der Steuereinrichtung mit einer zwischenkreisgeklemmten Pulsweitenmodulation (PWM) angesteuert. Zu Einzelheiten des Aufbaus und der Funktionsweise einer zwischenkreisgeklemmten PWM wird an dieser Stelle nochmals auf die EP 0 363 514 A1 verwiesen.

Nach der zwischenkreisgeklemmten PWM wird im ersten Arbeitsbereich A des Wechselrichters während einer 120°-Phase der MOSFET (z.B. S2) einer Halbbrücke durchgängig eingeschaltet, während die Leistungsschalter (z.B. S3-S6) der anderen Halbbrücken entsprechend der PWM getaktet werden. In der nächsten 120°-Phase wird der MOSFET (z.B. S4) einer anderen Halbbrücke durchgängig eingeschaltet, während die Leistungsschalter (z.B. S1-S2, S5-S6) der übrigen Halbbrücken getaktet werden, und in der nächsten 120°-Phase wird der MOSFET (z.B. S6) einer noch anderen Halbbrücke durchgängig eingeschaltet, während die Leistungsschalter (z.B. S1-S6) der übrigen Halbbrücken getaktet werden.

Figur 2 zeigt beispielhaft den Stromverlauf durch die erste Halbbrücke von Figur 1 während einer ersten 120°-Phase und im ersten Arbeitsbereich A. Da der MOSFET S2 während dieser 120°-Phase durchgängig eingeschaltet ist, d.h. auf den Zwischenkreis ZK geklemmt ist, fließt der Phasenstrom sowohl während der Leistungsaufnahme aus dem Zwischenkreis ZK (Stromverlauf a) als auch im Freilauf (Stromverlauf b) über den MOSFET S2. Somit treten während dieser Zeit am IGBT S1, welcher im ersten Arbeitsbereich A einen höheren Durchlasswiderstand als der MOSFET S2 hat, keine Durchlassverluste auf. Während diese erste Halbbrücke S1-S2 ungetaktet bleibt, werden die beiden anderen Halbbrücken S3-S4 und S5-S6 jeweils entsprechend der PWM getaktet.

In analoger Weise treten auch während der beiden anderen 120°-Phasen des Wechselrichters von Figur 1 im ersten Arbeitsbereich A an den IGBTs S3 und S5 keine Durchlassverluste auf, da die Phasenströme jeweils ausschließlich über die auf den Zwischenkreis ZK geklemmten MOSFETs S4 bzw. S6 fließen.

Im zweiten Arbeitsbereich B wird dagegen in einer 120°-Phase der IGBT einer Halbbrücke auf den Zwischenkreis ZK geklemmt und bleibt somit ungetaktet, während die IGBTs der anderen beiden Halbbrücken entsprechend der PWM getaktet werden. Die Phasenströme fließen deshalb in der ungetakteten Halbbrücke jeweils ausschließlich über den IGBT S1, S3 bzw. S5, welcher in diesem Arbeitsbereich B einen geringeren Durchlasswiderstand als der MOSFET aufweist. Auf diese Weise können auch im zweiten Arbeitsbereich B die Durchlass verluste des Wechselrichters reduziert werden.

Im Gegensatz zu herkömmlichen Wechselrichter-Schaltungsanordnungen kann auf diese Weise insbesondere auch im Bereich niedriger Leistungsaufnahmen (Arbeitsbereich A) der Wirkungsgrad des Wechselrichters verbessert werden.

## Patentansprüche

1. Wechselrichter-Schaltungsanordnung, mit drei elektrischen Halbbrücken, welche jeweils zwei in Reihe geschaltete Leistungsschalter (S1, S2; S3, S4; S5, S6) aufweisen, deren Verbindung jeweils einen Ausgang des Wechselrichters darstellt, und einer Steuereinrichtung zum Ansteuern der Leistungsschalter der Halbbrücken, wobei
jede der drei Halbbrücken einen ersten Leistungsschalter (S1; S3; S5) und einen zweiten Leistungsschalter (S2; S4; S6) aufweist,
**dadurch gekennzeichnet, dass**
die ersten Leistungsschalter (S1; S3; S5) in einem ersten Arbeitsbereich (A) des Wechselrichters einen höheren Durchlasswiderstand als die zweiten Leistungsschalter (S2; S4; S6) haben und die ersten Leistungsschalter (S1; S3; S5) in einem von dem ersten Arbeitsbereich verschiedenen zweiten Arbeitsbereich (B) des Wechselrichters einen geringeren Durchlasswiderstand als die zweiten Leistungsschalter (S2; S4; S6) haben; und
die Steuereinrichtung ausgebildet ist, um die Leistungsschalter (S1, S2; S3, S4; S5, S6) derart anzusteuern, dass
- in dem ersten Arbeitsbereich (A) des Wechselrichters zumindest überwiegend die zweiten Leistungsschalter (S2; S4; S6) eingeschaltet sind und/oder in dem zweiten Arbeitsbereich (B) des Wechselrichters zumindest überwiegend die ersten Leistungsschalter (S1; S3; S5) eingeschaltet sind,
- in jeder Phase wenigstens eine der drei Halbbrücken ungetaktet bleibt, und
- in der ungetakteten Halbbrücke jeweils derjenige des ersten oder des zweiten Leistungsschalters eingeschaltet ist, der in dem momentanen Arbeitsbereich (A, B) den geringeren Durchlasswiderstand besitzt.

2. Schaltungsanordnung nach Anspruch 1,
**dadurch gekennzeichnet, dass**
die drei elektrischen Halbbrücken im Wesentlichen identisch zueinander aufgebaut sind.

3. Schaltungsanordnung nach einem der vorhergehenden Ansprüche,
**dadurch gekennzeichnet, dass**
die ersten Leistungsschalter (S1; S3; S5) der Halbbrücken jeweils IGBTs sind.

4. Schaltungsanordnung nach einem der vorhergehenden Ansprüche,
**dadurch gekennzeichnet, dass**
die zweiten Leistungsschalter (S2; S4; S6) der Halbbrücken jeweils MOSFETs sind.

5. Verfahren zum Betreiben eines Wechselrichters mit drei elektrischen Halbbrücken, welche jeweils zwei in Reihe geschaltete Leistungsschalter (S1, S2; S3, S4; S5, S6) aufweisen, deren Verbindung jeweils einen Ausgang des Wechselrichters darstellt, wobei jede der drei Halbbrücken einen ersten Leistungsschalter (S1; S3; S5) und einen zweiten Leistungsschalter (S2; S4; S6) aufweist,
**dadurch gekennzeichnet, dass**
die ersten Leistungsschalter (S1; S3; S5) in einem ersten Arbeitsbereich (A) des Wechselrichters einen höheren Durchlasswiderstand als die zweiten Leistungsschalter (S2; S4; S6) haben und die ersten Leistungsschalter (S1; S3; S5) in einem von dem ersten Arbeitsbereich verschiedenen zweiten Arbeitsbereich (B) des Wechselrichters einen geringeren Durchlasswiderstand als die zweiten Leistungsschalter (S2; S4; S6) haben, und
die Leistungsschalter (S1, S2; S3, S4; S5, S6) derart angesteuert werden, dass
- in dem ersten Arbeitsbereich (A) des Wechselrichters zumindest überwiegend die zweiten Leistungsschalter (S2; S4; S6) eingeschaltet werden und/oder in dem zweiten Arbeitsbereich (B) des Wechselrichters zumindest überwiegend die ersten Leistungsschalter (S1; S3; S5) eingeschaltet werden,
- in jeder Phase wenigstens eine der drei Halbbrücken ungetaktet bleibt, und
- in der ungetakteten Halbbrücke jeweils derjenige des ersten oder des zweiten Leistungsschalters eingeschaltet wird, der in dem momentanen Arbeitsbereich (A, B) den geringeren Durchlasswiderstand besitzt.

6. Verfahren nach Anspruch 5,
**dadurch gekennzeichnet, dass**
die ersten Leistungsschalter (S1; S3; S5) der Halbbrücken jeweils IGBTs sind und/oder die zweiten Leistungsschalter (S2; S4; S6) der Halbbrücken jeweils MOSFETs sind, oder dass die ersten Leistungsschalter (S1; S3; S5) der Halbbrücken jeweils MOSFETs sind und/oder die zweiten Leistungsschalter (S2; S4; S6) der Halbbrücken jeweils IGBTs sind.

## Claims

1. Inverter circuit arrangement having three electrical half-bridges which each have two power switches (S1, S2; S3, S4; S5, S6) connected in series, the connection of which in each case constitutes an output of the inverter, and a control device for actuating the power switches of the half-bridges, wherein each of the three half-bridges has a first power switch (S1; S3; S5) and a second power switch (S2; S4; S6), **characterized in that**
the first power switches (S1; S3; S5) have a higher on-state resistance than the second power switches (S2; S4; S6) in a first operating range (A) of the inverter and the first power switches (S1; S3; S5) have a lower on-state resistance than the second power switches (S2; S4; S6) in a second operating range (B) of the inverter that is different to the first operating range; and
the control device is designed to actuate the power switches (S1, S2; S3, S4; S5, S6) in such a way that
- the second power switches (S2; S4; S6) are at least predominantly switched on in the first operating range (A) of the inverter and/or the first power switches (S1; S3; S5) are at least predominantly switched on in the second operating range (B) of the inverter,
- at least one of the three half-bridges remains unclocked in each phase, and
- in each case that one of the first or the second power switch that has the lower on-state resistance in the current operating range (A, B) is switched on in the unclocked half-bridge.

2. Circuit arrangement according to Claim 1, **characterized in that**
the three electrical half-bridges are constructed to be substantially identical to one another.

3. Circuit arrangement according to either of the preceding claims,
**characterized in that**
the first power switches (S1; S3; S5) of the half-bridges are each IGBTs.

4. Circuit arrangement according to one of the preceding claims,
**characterized in that**
the second power switches (S2; S4; S6) of the half-bridges are each MOSFETs.

5. Method for operating an inverter having three electrical half-bridges which each have two power switches (S1, S2; S3, S4; S5, S6) connected in series, the connection of which in each case constitutes an output of the inverter, wherein each of the three half-bridges has a first power switch (S1; S3; S5) and a second power switch (S2; S4; S6),
**characterized in that**
the first power switches (S1; S3; S5) have a higher on-state resistance than the second power switches (S2; S4; S6) in a first operating range (A) of the inverter and the first power switches (S1; S3; S5) have a lower on-state resistance than the second power switches (S2; S4; S6) in a second operating range (B) of the inverter that is different to the first operating range, and
the power switches (S1, S2; S3, S4; S5, S6) are actuated in such a way that
- the second power switches (S2; S4; S6) are at least predominantly switched on in the first operating range (A) of the inverter and/or the first power switches (S1; S3; S5) are at least predominantly switched on in the second operating range (B) of the inverter,
- at least one of the three half-bridges remains unclocked in each phase, and
- in each case that one of the first or the second power switch that has the lower on-state resistance in the current operating range (A, B) is switched on in the unclocked half-bridge.

6. Method according to Claim 5,
**characterized in that**
the first power switches (S1; S3; S5) of the half-bridges are each IGBTs and/or the second power switches (S2; S4; S6) of the half-bridges are each MOSFETs, or **in that** the first power switches (S1; S3; S5) of the half-bridges are each MOSFETs and/or the second power switches (S2; S4; S6) of the half-bridges are each IGBTs.

## Revendications

1. Circuit onduleur comprenant trois demi-ponts électriques qui comportent chacun deux commutateurs de puissance (S1, S2 ; S3, S4 ; S5, S6) connectés en série dont la liaison représente pour chacun d'eux une sortie de l'onduleur, et un dispositif de commande destiné à commander les commutateurs de puissance des demi-ponts, chacun des trois demi-ponts comportant un premier commutateur de puissance (S1 ; S3 ; S5) et un deuxième commutateur de puissance (S2 ; S4 ; S6),
**caractérisé en ce que**
les premiers commutateurs de puissance (S1 ; S3 ; S5) présentent, dans une première zone de fonctionnement (A) de l'onduleur, une résistance en mode passant qui est supérieure à celle des deuxièmes commutateurs de puissance (S2 ; S4 ; S6) et les premiers commutateurs de puissance (S1 ; S3 ; S5) présentent, dans une deuxième zone de travail (B) de l'onduleur, différente de la première zone de travail, une résistance en mode passant qui est inférieure à celle des deuxièmes commutateurs de puissance (S2 ; S4 ; S6) ; et
le dispositif de commande est conçu pour commander les commutateurs de puissance (S1, S2 ; S3, S4 ; S5, S6) de telle manière que
dans la première zone de travail (A) de l'onduleur, au moins essentiellement les deuxièmes commutateurs de puissance (S2 ; S4 ; S6) sont activés et/ou, dans la deuxième zone de travail (B) de l'onduleur, au moins essentiellement les premiers commutateurs de puissance (S1 ; S3 ; S5) sont activés,
- dans chaque phase, l'un au moins des trois demi-ponts reste non cadencé, et
- dans le demi-pont non cadencé, celui parmi le premier et le deuxième commutateur de puissance, qui présente la résistance en mode passant la plus faible dans la zone de fonctionnement actuelle (A, B), est activé.

2. Circuit selon la revendication 1,
**caractérisé en ce que**
les trois demi-ponts électriques ont une structure sensiblement identique les uns aux autres.

3. Circuit selon l'une des revendications précédentes,
**caractérisé en ce que**
les premiers commutateurs de puissance (S1 ; S3 ; S5) des demi-ponts comportent chacun des IGBT.

4. Circuit selon l'une des revendications précédentes,
**caractérisé en ce que**
les deuxièmes commutateurs de puissance (S2 ; S4 ; S6) des demi-ponts comportent chacun des MOSFET.

5. Procédé de fonctionnement d'un onduleur comprenant trois demi-ponts électriques qui comportent chacun deux commutateurs de puissance (S1, S2 ; S3, S4 ; S5, S6) montés en série dont la liaison représente pour chacun d'eux une sortie de l'onduleur, chacun des trois demi-ponts comportant un premier commutateur de puissance (S1 ; S3 ; S5) et un deuxième commutateur de puissance (S2 ; S4 ; S6),
**caractérisé en ce que**
les premiers commutateurs de puissance (S1 ; S3 ; S5) présentent, dans une première zone de fonctionnement (A) de l'onduleur, une résistance en mode passant qui est supérieure à celle des deuxièmes commutateurs de puissance (S2 ; S4 ; S6) et les premiers commutateurs de puissance (S1 ; S3 ; S5) présentent, dans une deuxième zone de travail (B) de l'onduleur, différente de la première zone de travail, une résistance en mode passant qui est inférieure à celle des deuxièmes commutateurs de puissance (S2 ; S4 ; S6) ; et
les commutateurs de puissance (S1, S2 ; S3, S4 ; S5, S6) sont commandés de telle manière que
dans la première zone de travail (A) de l'onduleur, au moins essentiellement les deuxièmes commutateurs de puissance (S2 ; S4 ; S6) sont activés et/ou, dans la deuxième zone de travail (B) de l'onduleur, au moins essentiellement les premiers commutateurs de puissance (S1 ; S3 ; S5) sont activés,
- dans chaque phase, l'un au moins des trois demi-ponts reste non cadencé, et
- dans le demi-pont non cadencé, celui parmi le premier et le deuxième commutateur de puissance, qui présente la résistance en mode passant la plus faible dans la zone de fonctionnement actuelle (A, B), est activé.

6. Procédé selon la revendication 5,
**caractérisé en ce que**
les premiers commutateurs de puissance (S1 ; S3 ; S5) des demi-ponts comportent chacun des IGBT et/ou les deuxièmes commutateurs de puissance (S2 ; S4 ; S6) des demi-ponts comportent chacun des MOSFET, ou **en ce que** les premiers commutateurs de puissance (S1 ; S3 ; S5) des demi-ponts sont chacun des MOSFET et/ou les deuxièmes commutateurs de puissance (S2 ; S4 ; S6) des demi-ponts sont chacun des IGBT.
